# EUROPÄISCHE PATENTANMELDUNG

(11) **EP 3 211 203 A1**
(43) Veröffentlichungstag der Anmeldung: **30.08.2017**
(21) Anmeldenummer: 17154998.3
(22) Anmeldetag: 07.02.2017
(51) Int. Cl.: F02F 3/22, F02F 3/00, F01M 1/06

(54) **KOLBEN EINER BRENNKRAFTMASCHINE**

(30) Priorität: 22.02.2016 DE 102016202643
(71) Anmelder: Mahle International GmbH, 70376 Stuttgart (DE)
(72) Erfinder: Müller, Benjamin, 71706 Markgröningen (DE)
(74) Vertreter: BRP Renaud & Partner mbB Rechtsanwälte Patentanwälte Steuerberater

(57) **Zusammenfassung**

Die vorliegende Erfindung betrifft einen Kolben (1) einer Brennkraftmaschine (2), mit einem Kolbenoberteil (3) und einem Kolbenunterteil (4), mit einem Kolbenbolzen, der im Kolbenunterteil (4) gelagert ist und der Anbindung des Kolbens (1) an eine Pleuelstange (5) der Brennkraftmaschine (2) dient, mit einem zwischen dem Kolbenoberteil (3) und dem Kolbenunterteil (4) ausgebildeten inneren Kühlraum (7) für Kühlöl zur Kühlung des Kolbens (1), mit einem im Kolbenunterteil (4) beweglich gelagerten Gleitschuh (10), der über ein Federelement (11) gegen einen Pleuelkopf (6) der Pleuelstange (5) gedrückt ist und der Überführung von Kühlöl in den inneren Kühlraum (7) dient, wobei zwischen dem Gleitschuh (10) und dem Kolbenunterteil (4) eine Führungsfläche (13) für den Gleitschuh (10) ausgebildet ist.

Erfindungswesentlich ist dabei, dass die Führungsfläche (13) an einer zwischen dem Gleitschuh (10) und dem Kolbenunterteil (4) angeordneten Hülse (14) ausgebildet ist, so dass das Federelement (11) die Führungsfläche (13) umschließt.

## Beschreibung

Die vorliegende Erfindung betrifft einen Kolben einer Brennkraftmaschine mit einem Kolbenoberteil und einem damit verbundenen Kolbenunterteil, gemäß dem Oberbegriff des Anspruchs 1. Die Erfindung betrifft außerdem eine vorgefertigte Gleitschuhbaugruppe für einen solchen Kolben sowie eine Brennkraftmaschine mit zumindest einem solchen Kolben.

Insbesondere bei vergleichsweise großen Kolben für Industrieanwendungen (zum Beispiel bei Schiffsmotoren), kann die Ölzufuhr über einen sogenannten Gleitschuh erfolgen. In der Regel haben solche Kolben einen inneren Kühlraum, der unterhalb der Verbrennungsmulde und im radial mittleren Bereich angeordnet ist. Radial außen liegt zudem ein Kühlkanal, der in bekannter Weise ausgebildet und über Überleitöffnungen mit dem inneren Kühlraum verbunden ist. Die Ölzufuhr findet dabei über eine in der Pleuelstange eingebrachte Durchgangsöffnung/Bohrung statt, wobei das Kühlöl über eine trichterförmige Hülse dem Kühlraum zugeführt wird.

Aus der DE 10 2012 208 090 A1 ist ein gattungsgemäßer Kolben einer Brennkraftmaschine mit einem Kolbenoberteil und einem Kolbenunterteil und mit einem Kolbenbolzen bekannt, der im Kolbenunterteil gelagert ist und der Anbindung des Kolbens an eine Pleuelstange der Brennkraftmaschine dient. Des Weiteren vorgesehen ist ein im Kolbenunterteil beweglich gelagerter Gleitschuh, der über ein Federelement gegen ein Pleuelkopf der Pleuelstange gedrückt wird und der der Überführung von durch eine Durchgangsöffnung/Bohrung in der Pleuelstange gefördertem Kühlöl in einen zwischen dem Kolbenoberteil und dem Kolbenunterteil ausgebildeten inneren Kühlraum dient. Zwischen dem Gleitschuh und dem Kolbenunterteil ist dabei eine Führungsfläche für diesen Gleitschuh ausgebildet.

Um eine gewisse Abdichtung zwischen dem Pleuel und dem auf den Pleuel aufsitzenden Gleitschuh sicherzustellen, wird dieser über das zuvor beschriebene Federelement gegen den Pleuelkopf der Pleuelstange gedrückt. Da die Gleitfläche zwischen dem Gleitschuh und dem Kolbenunterteil ausgebildet ist, muss zum einen auf eine besonders fein bearbeitete Führungsfläche geachtet und zum anderen ein Verschleiß berücksichtigt werden, der nach langem Betrieb im ungünstigsten Fall zu einem Versagen entweder der Führungsfläche des Kolbenunterteils oder des Gleitschuhs führen kann.

Die vorliegende Erfindung beschäftigt sich daher mit dem Problem, für einen Kolben der gattungsgemäßen Art eine verbesserte oder zumindest eine alternative Ausführungsform anzugeben, welche insbesondere eine erhöhte Wartungsfreundlichkeit aufweist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Führungsfläche zwischen einem Gleitschuh und einem Kolbenunterteil eines Kolbens nicht mehr direkt am Kolbenunterteil zwischen dem Gleitschuh und dem Kolbenunterteil anzuordnen, sondern zwischen diesen beiden Komponenten eine Hülse anzuordnen und an deren Innenmantelfläche die Führungsfläche vorzusehen, so dass bei einem Verschleiß der Führungsfläche nicht der gesamte Kolben ausgetauscht werden muss, sondern lediglich die Hülse bzw. der Gleitschuh. Durch die Verlagerung der eigentlichen Führungsfläche vom Kolbenunterteil an die Hülse, findet am Kolbenunterteil keinerlei Verschleiß mehr statt, wodurch dieser eine deutlich längere Standzeit aufweist und wobei zugleich durch die Verlagerung der Führungsfläche an die Hülse die Wartung des erfindungsgemäßen Kolbens bzw. einer mit einem solchen Kolben ausgestatteten Brennkraftmaschine deutlich vereinfacht wird. Die Führungsfläche für den Gleitschuh ist dabei in Axialrichtung ausgeführt. Der erfindungsgemäße Kolben der Brennkraftmaschine weist dabei besagtes Kolbenoberteil und besagtes Kolbenunterteil auf, ebenso wie üblicherweise einen Kolbenbolzen, der im Kolbenunterteil gelagert ist und der Anbindung des Kolbens an eine Pleuelstange der Brennkraftmaschine dient. Zwischen dem Kolbenoberteil und dem Kolbenunterteil ist dabei ein innerer Kühlraum für Kühlöl zur Kühlung des Kolbens ausgebildet, wobei im Kolbenunterteil der beweglich gelagerte Gleitschuh vorgesehen ist, der über ein Federelement gegen den Pleuelkopf der Pleuelstange gedrückt wird und der Überführung von durch eine Bohrung in der Pleuelstange geführtem Kühlöl in den inneren Kühlraum dient. Zwischen dem Gleitschuh und dem Kolbenunterteil, konkret an einer dort angeordneten Hülse, ist dabei erfindungsgemäß die Führungsfläche für den Gleitschuh ausgebildet. Das Federelement umschließt dabei die Führungsfläche. Mit dem erfindungsgemäßen Kolben und dem erfindungsgemäßen Gleitschuh ist es erstmals möglich, die verschleißbehaftete Führungsfläche vom Kolben weg, hin zur Hülse zu verlagern, wodurch bei einem auftretenden Verschleiß lediglich die Hülse bzw. die Gleitschuhbaugruppe und nicht der gesamte Kolben ausgetauscht werden müssen.

Bei einer vorteilhaften Weiterbildung der erfindungsgemäßen Lösung befindet sich die Führungsfläche des Gleitschuhs radial innerhalb des Federelements, wodurch insbesondere eine Bauhöhe der Gleitschuhbaugruppe reduziert werden kann und dadurch ein Kolbendesign mit geringerer Kompressionshöhe ermöglicht wird.

Bei einer vorteilhaften Weiterbildung der erfindungsgemäßen Lösung weist die Hülse eine Innenhülse und eine insbesondere einstückig damit ausgebildete Außenhülse auf, wobei die Führungsfläche an einer Innenmantelfläche der Innenhülse angeordnet ist. Das Federelement selbst ist dabei zwischen der Innenhülse und der Außenhülse und damit geschützt zwischen der Innenhülse und der Außenhülse angeordnet. Da die Außenhülse der Außenmantelfläche nicht am Kolbenunterteil reibt, findet hier kein Verschleiß statt, so dass der Kolben an dieser Stelle überhaupt keinem Reibverschleiß ausgesetzt ist. Die Hülse kann dabei auch einteilig, das heißt aus mehreren unlösbar miteinander verbundenen Bauteilen oder mehrteilig ausgebildet sein.

Bei einer weiteren vorteilhaften Ausführungsform der erfindungsgemäßen Lösung ist die Hülse über ein Sicherungselement, insbesondere über einen Sicherungsring, am Gleitschuh fixiert, wobei die Hülse, das Federelement, der Gleitschuh und das Sicherungselement eine vorfertigbare, insbesondere sogar eine vorgefertigte, Baugruppe bilden. Dies bietet den besonderen Vorteil, dass eine diese Komponenten umfassende Baugruppe komplett separat vorfertigbar ist und in bereits gespanntem Zustand, das heißt mit gespanntem Federelement, in den gebauten Kolben eingesetzt werden kann. Durch diesen Umstand ist es möglich, ein längeres Federelement mit weicher Federrate einzubauen, was wiederum die Bauhöhe der Gleitschuhbaugruppe reduziert und gleichzeitig ein Kolbendesign mit geringer Kompressionshöhe ermöglicht. Hieraus resultiert auch eine geringere Kolbenmasse, was insbesondere für eine Wirtschaftlichkeit einer damit ausgestatteten Brennkraftmaschine von besonderer Bedeutung ist. Bei gleichbleibender Kompressionshöhe kann andererseits die Verbrennungsmulde tiefer ausgeführt werden, wodurch höhere Leistungsdichten erreicht werden können. Eine weiche Federrate des Federelements bringt darüber hinaus den Vorteil mit sich, dass Krafttoleranzen leichter eingehalten werden können. Durch die Zusammenfassung der Hülse, des Federelements, des Gleitschuhs und des Sicherungselements in eine vorgefertigte Baugruppe ergeben sich auch Montagevorteile, da keine zusätzlichen Montagevorrichtungen für den Einbau im Kolben mehr erforderlich sind.

Bei einer weiteren vorteilhaften Ausführungsform der erfindungsgemäßen Lösung weist das Kolbenunterteil eine zylindrische Aufnahme mit einem radial nach innen ragenden Kragen auf, wobei die Hülse in der zylindrischen Aufnahme formschlüssig aufgenommen und an den Kragen als Axialanschlag anliegt. Hierdurch ist eine besonders einfache Montage der Gleitschuhbaugruppe im Kolben möglich, da diese lediglich aus Richtung des Kolbenbolzens in die zugehörige zylindrische Aufnahme eingesteckt werden muss, bis sie mit einer radialen Stufe an dem radial nach innen ragenden Kragen der zylindrischen Aufnahme anliegt. In diesem Zustand durchgreift die Hülse mit einem Axialfortsatz die zylindrische Aufnahme und kann an der gegenüberliegenden Seite des radial nach innen ragenden Kragens mittels eines Sicherungselements, insbesondere mittels eines Sicherungsrings, einfach fixiert werden. Hierdurch ist eine besonders einfache Montage der Gleitschuhbaugruppe im Kolbenunterteil möglich.

Die vorliegende Erfindung beruht weiter auf dem allgemeinen Gedanken, eine vorgefertigte Gleitschuhbaugruppe für einen zuvor beschriebenen Kolben anzugeben, mit einer Hülse, einem Federelement, einem Gleitschuh und einem Sicherungselement. Eine derartig vorgefertigte Gleitschuhbaugruppe kann als verschleißbedingtes Ersatzteil einfach vorgehalten und verschleißabhängig eingebaut werden. Hierdurch lässt sich insbesondere ein Komplettaustausch des Kolbens bei Verschleiß der Führungsfläche vermeiden und dadurch Wartungskosten deutlich reduzieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen Kolben,
- Fig. 2: eine Schnittdarstellung durch eine erfindungsgemäße Gleitschuhbaugruppe,
- Fig. 3: eine Schnittdarstellung durch einen erfindungsgemäßen Kolben bei einer anderen Ausführungsform.

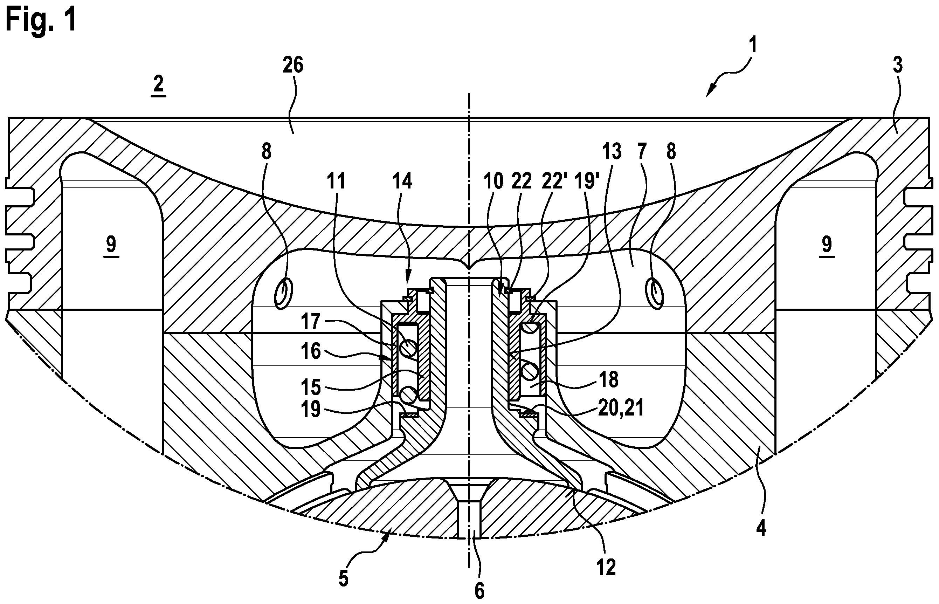

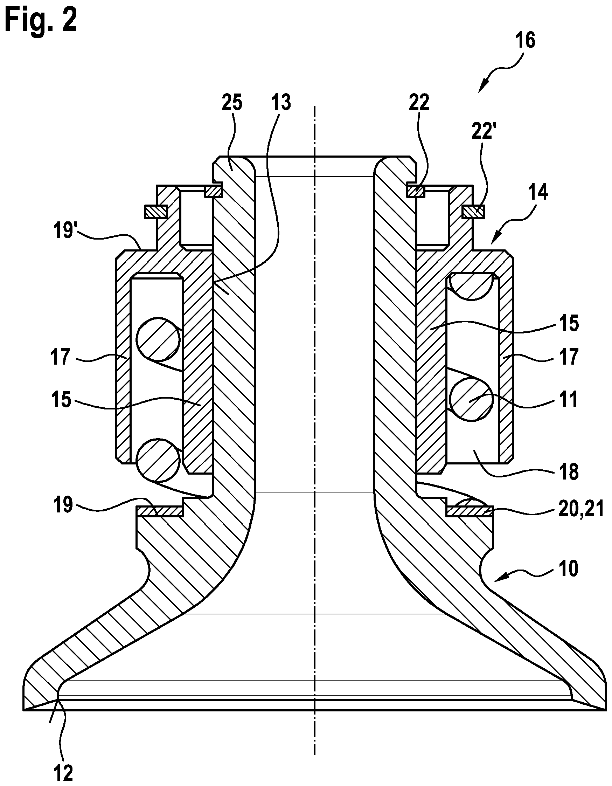

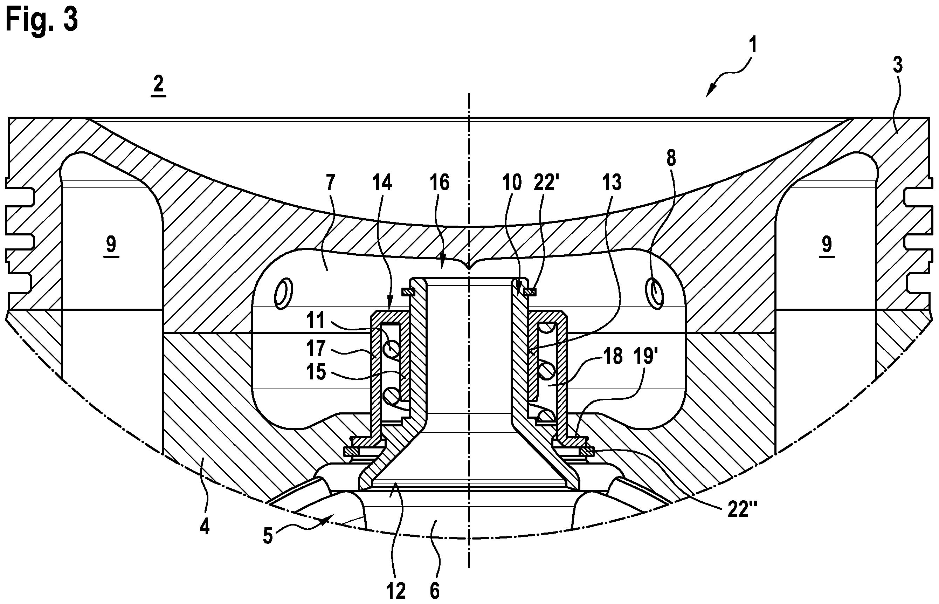

Entsprechend den Fig. 1 und 3, weist ein erfindungsgemäßer Kolben 1 einer Brennkraftmaschine 2 ein Kolbenoberteil 3 sowie ein Kolbenunterteil 4 auf. Im Kolbenunterteil 4 ist ein nicht gezeichneter Kolbenbolzen gelagert, der der Anbindung des Kolbens 1 an eine Pleuelstange 5 dient. Über die Pleuelstange 5 ist der Kolben 1 in bekannter Weise mit einer ebenfalls nicht gezeigten Kurbelwelle der Brennkraftmaschine 2 antriebsverbunden. Zwischen dem Kolbenoberteil 3 und dem Kolbenunterteil 4 ist darüber hinaus ein innerer Kühlraum 7 für Kühlöl zur Kühlung des Kolbens 1 angeordnet, der über mindestens eine Überleitöffnung 8 mit einem zwischen dem Kolbenoberteil 3 und dem Kolbenunterteil 4 ausgebildeten äußeren Kühlraum 9 fluidisch verbunden ist. Im Kolbenunterteil 4 ist darüber hinaus ein Gleitschuh 10 (vergleiche auch die Fig. 2) beweglich gelagert, der über ein Federelement 11 gegen den Pleuelkopf der Pleuelstange 5 vorgespannt ist und der Überführung von durch beispielsweise eine Durchgangsöffnung 6 in der Pleuelstange 5 geführtem Kühlöl in den inneren Kühlraum 7 dient. Das Federelement 11 ist im gezeigten Fall als Schraubenfeder ausgebildet. Der Gleitschuh 10 dient dabei als Trichter zum Auffangen von Kühlöl und wird aufgrund des Federelements 11 mit einer Gleitfläche 12 gleitend gegen den Pleuelkopf der Pleuelstange 5 gedrückt. Um nun eine Axialbewegung aufgrund des Verschwenkens des Pleuelkopfes mitmachen zu können, ist der Gleitschuh 10 axial beweglich über eine zwischen diesem und dem Kolbenunterteil 4 angeordnete Führungsfläche 13 geführt. Erfindungsgemäß ist nun diese Führungsfläche 13, nicht wie bisher aus dem Stand der Technik bekannt, direkt am Kolbenunterteil 4 angeordnet, sondern an einer Hülse 14, genauer gesagt sogar an einer Innenmantelfläche einer Innenhülse 15 der Hülse 14, so dass ein Verschleiß der Führungsfläche 13 nicht zu einem direkten Verschleiß am Kolbenunterteil 4 und damit im Verschleißfall zu einem Austauschen des Kolbens 1 führt, sondern im Verschleißfall lediglich die Hülse 14 bzw. eine Gleitschuhbaugruppe 16 (vergleich Figur 2) ausgetauscht werden muss, wodurch sich die Wartungskosten deutlich reduzieren lassen. Die Führungsfläche 13 ist dabei zudem radial innerhalb des Federelements 11 und nicht wie bislang aus dem Stand der Technik bekannt, radial außerhalb desselben angeordnet, wodurch insbesondere eine Bauhöhe der Gleitschuhbaugruppe 16 reduziert werden kann und dadurch ein Kolbendesign mit geringerer Kompressionshöhe ermöglicht wird.

Betrachtet man die Hülse 14 genauer, so kann man erkennen, dass diese zuvor beschriebene Innenhülse 15 sowie eine insbesondere einstückig damit ausgebildete Außenhülse 17 aufweist, wobei die Führungsfläche 13 an der Innenmantelfläche der Innenhülse 15 angeordnet ist. Selbstverständlich kann die Innenhülse 15 auch als separates Bauteil ausgebildet sein, so dass in diesem Fall die Hülse 14 mehrteilig ausgebildet wäre. Die Innenhülse 15 und die Außenhülse 17 bilden dabei zusammen eine ringförmige Aufnahme 18, in welcher das Federelement 11 angeordnet ist. Das Federelement 11 stützt sich dabei einerseits an einem Boden der ringförmigen Aufnahme 18, das heißt an der Hülse 14 und andererseits am Gleitschuh 10, insbesondere an einer Radialstufe 19 an diesem ab. Um dabei einen Verschleiß der Radialstufe 19 minimieren zu können, kann auf diese eine Verschleißschutzbeschichtung 20 bzw. ein Auflagering 21 (vergleiche Fig. 2) aufbracht sein, so dass das Federelement 11 auf der Verschleißschutzbeschichtung 20 oder dem Auflagering 21 aufliegt.

Fixiert wird die Hülse 14 am Gleitschuh 10 über ein Sicherungselement 22, beispielsweise einen Sicherungsring, der in eine entsprechende Nut an dem zylinderförmigen Teil des Gleitschuhs 10 eingesetzt wird.

Eine Montage der Gleitschuhbaugruppe 16 erfolgt dabei wie folgt: Zunächst wird beispielsweise das Federelement 11 in die ringförmige Aufnahme 18 der Hülse 14 eingebracht und anschließend der Gleitschuh 10 mit seinem zylinderförmigen Abschnitt durch eine zentrale Öffnung der Hülse 14 hindurch geschoben, bis er auf der anderen Seite wieder austritt. Anschließend wird in die an dem austretenden Abschnitt angeordnete Nut das Sicherungselement 22 eingesetzt, woraufhin die aus Gleitschuh 10, Federelement 11, Hülse 14 und Sicherungselement 22 zusammengesetzte Gleitschuhbaugruppe 16 vorgefertigt ist. Vor dem Zusammenbau kann selbstverständlich, sofern erwünscht, noch der Auflagering 21 montiert werden.

Eine Montage der Gleitschuhbaugruppe 16 im Kolben 1 erfolgt dabei wie folgt: Zunächst wird die vorgefertigte Gleitschuhbaugruppe 16 in eine zylindrische Aufnahme 24 des Kolbenunterteils 4 in Richtung des inneren Kühlraums 7 eingeschoben, wobei die zylindrische Aufnahme 23 einen radial nach innen ragenden Kragen 24 aufweist und wobei die Hülse 14 in der zylindrischen Aufnahme 23 formschlüssig aufgenommen ist und an dem Kragen 24 als Axialanschlag anliegt. In diesem Zustand greift die Hülse 14 mit einem Axialfortsatz 25 durch eine zentrale Öffnung der Aufnahme 23 hindurch, so dass ein weiteres Sicherungselement 22' in eine im Axialfortsatz 25 angeordnete Nut eingeschoben werden kann. In diesem Zustand ist nun der radial nach innen ragende Kragen 24 zwischen dem Sicherungselement 22' einerseits und einer radialen Stufe 19' andererseits eingeklemmt.

Betrachtet man den Kolben 1 gemäß der Fig. 3, so kann man dort eine Gleitschuhbaugruppe 16 erkennen, die komplett von unten in den Kolben 1 eingebaut werden kann, das heißt insbesondere auch nach einem Verbinden des Kolbenoberteils 3 mit dem Kolbenunterteil 4. Gesichert wird dabei die Gleitschuhbaugruppe 16 im Kolbenunterteil 4 durch einen Sicherungsring 22", der ebenfalls von unten lösbar bzw. einsetzbar ist. Dies bietet den besonderen Vorteil, dass die Gleitschuhbaugruppe 16 auch komplett von unten ausgetauscht werden kann, ohne das Kolbenunterteil 4 vom Kolbenoberteil 3 lösen zu müssen. Die Radialstufe 19' ist bei dieser Ausführungsform nach unten verschoben. Der Kolben 1 gemäß der Fig. 3 weist darüber hinaus den Vorteil auf, dass dieser leichter ist, da die zylindrische Aufnahme 23 deutlich niedriger ausgebildet ist. Allen Ausführungsformen ist dabei gemein, dass das Federelement 11 die Führungsfläche 13 umschließt.

Im Betrieb der Brennkraftmaschine 2 erfolgt nun aufgrund der Bewegung der Pleuelstange 5 und damit des Pleuelkopfes eine Axialbewegung des Gleitschuhs 10 entlang der Führungsfläche 13, wobei zwischen der Hülse 14 und dem Kolbenunterteil 4 keinerlei Relativbewegung und damit auch keinerlei Verschleiß mehr auftritt. Der Verschleiß kann sich allenfalls noch an der nunmehr an die Innenmantelfläche der Innenhülse 15 verschobenen Führungsfläche 13 auftreten, wobei im Verschleißfall einfach die Hülse 14 bzw. die gesamte Gleitschuhbaugruppe 16 ausgetauscht werden, was im Vergleich zu einem Austausch eines Kolbens bzw. Kolbenunterteils deutlich kostengünstiger und wartungsfreundlicher ist.

Durch die vorfertigbaren bzw. vorgefertigte Gleitschuhbaugruppe 16 kann diese mit bereits gespanntem Federelement 11 in den Kolben 1 eingebaut werden, wobei ein längeres Federelement 11 mit weicher Federrate eingebaut werden kann, was wiederum die Bauhöhe der Gleitschuhbaugruppe 16 reduziert und gleichzeitig ein Kolbendesign mit geringer Kompressionshöhe und damit auch mit geringer Kolbenmasse ermöglicht. Andererseits könnte beispielsweise bei gleichbleibender Kompressionshöhe die Verbrennungsmulde 26 tiefer ausgeführt werden, wodurch höhere Leistungsdichten erreicht werden können. Eine weichere Federkennlinie bzw. Federrate bringt zudem den Vorteil mit sich, dass Krafttoleranzen leichter eingehalten werden können. Durch die vorgefertigte Gleitschuhbaugruppe 16 sind auch keine weiteren Montagevorrichtungen für den Einbau erforderlich.

Bei geringen Platzverhältnissen erlaubt der erfindungsgemäße Aufbau des Gleitschuhs 10 im Zusammenhang mit einer Gleitschuhbaugruppe 16 den Einsatz von Federelementen 11 mit weicher Federkennlinie, wodurch weniger strenge Maßtoleranzen zwischen der Lage des Pleuelkopfes und der Radialstufe 19 des Federelements 11 möglich sind. Die Kraft des Federelements 11 ergibt sich aus der vorgespannten Länge desselben. Da bei dieser Erfindung gegenüber dem Stand der Technik längere ungespannte Federelemente 11 mit geringerer Federrate bei gleicher Betriebskraft eingesetzt werden können (->weichere Federkennlinie), ergeben sich bei schwankender gespannter Federlänge (schwankend, da gebildet aus Kolbenunterteil 4, Gleitschuh 10 und Pleuel 5 mit jeweiligen Fertigungstoleranzen) geringere Kraftschwankungen. Vorteile davon sind wie beschrieben gröbere Fertigungstoleranzen oder über alle Kolben 1 einer Brennkraftmaschine 2 sehr ähnliche Bedingungen.

Als weiterer Vorteil der erfindungsgemäßen Hülse 14 ist deren doppelt hülsenförmiger Aufbau zu nennen, bei welchem die Außenhülse 17 zum Kolbenunterteil 4 gesichert und damit fixiert ist und somit kein Verschleiß an diesem stattfindet. Generell kann die Außenhülse 17 einstückig, einteilig oder auch mehrteilig ausgebildet sein.

## Patentansprüche

1. Kolben (1) einer Brennkraftmaschine (2),
- mit einem Kolbenoberteil (3), einem Kolbenunterteil (4) und einer Pleuelstange (5),
- mit einem zwischen dem Kolbenoberteil (3) und dem Kolbenunterteil (4) ausgebildeten inneren Kühlraum (7) für Kühlöl zur Kühlung des Kolbens (1),
- mit einem im Kolbenunterteil (4) beweglich gelagerten Gleitschuh (10), der über ein Federelement (11) gegen einen Pleuelkopf (6) der Pleuelstange (5) gedrückt ist und der Überführung von Kühlöl in den inneren Kühlraum (7) dient, wobei zwischen dem Gleitschuh (10) und dem Kolbenunterteil (4) eine Führungsfläche (13) für den Gleitschuh (10) vorgesehen ist,
**dadurch gekennzeichnet,**
- **dass** die Führungsfläche (13) an einer zwischen dem Gleitschuh (10) und dem Kolbenunterteil (4) angeordneten Hülse (14) ausgebildet ist,
- **dass** die Hülse (14) eine Innenhülse (15) und eine einstückig damit ausgebildete Außenhülse (17) aufweist, wobei die Führungsfläche (13) an einer Innenmantelfläche der Innenhülse (15) angeordnet ist.

2. Kolben nach Anspruch 1,
**dadurch gekennzeichnet,**
**dass** das Federelement (11) zwischen der Innenhülse (15) und der Außenhülse (17) angeordnet ist.

3. Kolben nach einem der vorhergehenden Ansprüche,
**dadurch gekennzeichnet,**
**dass** sich das Federelement (11) einerseits an der Hülse (14) und andererseits am Gleitschuh (10) abstützt.

4. Kolben nach einem der Ansprüche 1 bis 3,
**dadurch gekennzeichnet,**
- **dass** die Hülse (14) über ein Sicherungselement (22), insbesondere über einen Sicherungsring, am Gleitschuh (10) fixiert ist, und/oder
- **dass** die Hülse (14) über ein Sicherungselement (22'), insbesondere über einen Sicherungsring, am Kolbenunterteil (4) fixiert ist.

5. Kolben nach Anspruch 4,
**dadurch gekennzeichnet,**
**dass** die Hülse (14), das Federelement (11), der Gleitschuh (10) und das Sicherungselement (22) eine vorgefertigte Gleitschuhbaugruppe (16) bilden.

6. Kolben nach einem der Ansprüche 1 bis 5,
**dadurch gekennzeichnet,**
**dass** das Kolbenunterteil (4) eine zylindrische Aufnahme (23) mit einem radial nach innen ragenden Kragen (24) aufweist, wobei die Hülse (14) in der zylindrischen Aufnahme (23) formschlüssig aufgenommen ist und an dem Kragen (24) als Axialanschlag anliegt.

7. Kolben nach einem der Ansprüche 1 bis 6,
**dadurch gekennzeichnet,**
**dass** die Führungsfläche (13) radial innerhalb des Federelements (11) angeordnet ist.

8. Vorgefertigte Gleitschuhbaugruppe (16) für einen Kolben (1) nach einem der vorhergehenden Ansprüche, mit einer Hülse (14), einem Federelement (11), einem Gleitschuh (10) und einem Sicherungselement (22).

9. Gleitschuhbaugruppe nach Anspruch 8,
**dadurch gekennzeichnet,**
**dass** die Hülse (14) eine Innenhülse (15) und eine Außenhülse (17) aufweist, wobei die Führungsfläche (13) an einer Innenmantelfläche der Innenhülse (15) angeordnet ist.

10. Gleitschuhbaugruppe nach Anspruch 9,
**dadurch gekennzeichnet,**
**dass** das Federelement (11) zwischen der Innenhülse (15) und der Außenhülse (17) angeordnet ist.

11. Gleitschuhbaugruppe nach einem der Ansprüche 8 bis 10,
**dadurch gekennzeichnet,**
**dass** sich das Federelement (11) einerseits an der Hülse (14) und andererseits an dem Gleitschuh (10) abstützt.

12. Brennkraftmaschine (2) mit zumindest einem Kolben (1) nach einem der Ansprüche 1 bis 8 und zumindest einer Gleitschuhbaugruppe (16) nach einem der Ansprüche 8 bis 11.
